# EUROPÄISCHE PATENTANMELDUNG

(11) **EP 1 304 554 A2**
(43) Veröffentlichungstag der Anmeldung: **23.04.2003**
(21) Anmeldenummer: 02022387.1
(22) Anmeldetag: 09.10.2002
(51) Int. Cl.: G01J 3/46

(54) **Neuronales Netz zur bestimmung von Anteilen von Komponenten einer Rezeptur zur Herstellung eines Produkts einer gewünschten Farbe**

(30) Priorität: 22.10.2001 DE 10152004
(71) Anmelder: Bayer Aktiengesellschaft, 51368 Leverkusen (DE)
(72) Erfinder: Sarabi, Bahman, Dr., 47803 Krefeld (DE)

(57) **Zusammenfassung**

Die Erfindung betrifft ein neuronales Netz zur Bestimmung von Anteilen von Komponenten einer Rezeptur zur Herstellung eines Produkts einer bestimmten Farbe, vorzugsweise eines Polymers, mit einem Eingang 2, 3 zur Eingabe einer Farbkoordinate einer Komponente der Rezeptur und/oder zur Eingabe der gewünschten Farbkoordinaten des Produkts und mit einem Ausgang 4 zur Ausgabe von zumindest einem Anteil einer Komponente.

## Beschreibung

Die Erfindung betrifft ein neuronales Netz zur Bestimmung von Anteilen von Komponenten einer Rezeptur zur Herstellung eines Produkts einer gewünschten Farbe sowie ein entsprechendes Verfahren zum Trainieren eines neuronalen Netzes und ein Verfahren zur Herstellung eines Kunststoffspritzgießformteils und ein entsprechendes System.

Aus der US-A-5,723,517 ist ein System zur Farbnachstellung eines kompoundierten Polymers während des Herstellungsvorgangs bekannt. Mittels eines Sensors wird die Farbe des kompoundierten Polymers zu vorbestimmten Zeitpunkten gemessen. Der gemessene Ist-Wert wird dann von einem Regelungsgerät mit einem Sollwert verglichen und entsprechend werden die Mengen von dem kompoundierten Polymer beizufügenden Farbstoffen und Farbpigmenten geregelt.

Dieses System ist insbesondere insofern nachteilig, als erhebliche Mengen von Farbstoffen dem kompoundierten Polymer zugefügt werden müssen und außerdem die Farbe des Endprodukts Schwankungen unterworfen ist. Ein weiterer Nachteil ist, dass die Messung des Ist-Werts mit einem Sensor erfolgt, welcher eine erheblich geringere Farbauflösung als das menschliche Auge hat. Das Ergebnis eines solchen Herstellungsverfahrens wird deshalb den Anforderungen an die Farbtreue eines Coloristen und auch des Endverbrauchers nicht gerecht.

Entsprechende Verfahren zur Herstellung von Kunststoffspritzgießformteilen, die eine bestimmte Farbe aufweisen sollen, sind auch aus US-A-5,756,020, US-A-4,684,488, DE 196 54 829, EP 594 904, EP 407 927 und EP 131 414 bekannt.

Ein gemeinsamer Nachteil dieser vorbekannten Verfahren ist, dass die Genauigkeit, mit der sich ein Kunststoffprodukt einer gewünschten Farbe herstellen lässt, nicht ausreichend ist, um den Anforderungen von Coloristen und Endverbrauchern zu entsprechen. Daher ist bei der Produktion eines entsprechenden Kunststoffprodukts ein gewisses Maß von "Ausprobieren" bis zur Erreichung einer Zusammensetzung des kompoundierten Polymers, so dass sich die gewünschte Farbe ergibt, nicht zu vermeiden. Dies ist mit ganz erheblichem Zeit- und Kostenaufwand verbunden.

Aus dem Stand der Technik sind verschiedene Vorrichtungen zur Farbmessung bekannt. Aus der DE 196 44 616 A1 ist eine Farbmessvorrichtung bekannt, welche eine Lichtquelle und ein Fotoelement zum Empfang der von der Oberfläche der Probe diffus reflektierten Strahlung aufweist.

Aus der DE 196 44 617 A1 ist ein weiteres Verfahren und eine Vorrichtung zur Farbmessung bekannt. Dieses Verfahren dient zur Messung der Farbe einer in einem Behälter befindlichen Probe von körnigem oder granuliertem Gut durch Erfassung der Remission eines von dem Messkopf des Farbmessgeräts auf die Oberfläche der Probe ausgesandten Messstrahls.

Aus US-A 5 526 285, JP-A 0 90 333 49, JP-A 0 72 982 8 1, FR-A 27 08 105 sind verschiedene weitere Verfahren und Vorrichtungen zur Farbbestimmung bekannt. Farbmessvorrichtungen sind kommerziell z. B. von der Firma Dr. Bruno Lange GmbH, Königsweg 10, 14163 Berlin (www.drlange.de) 1 erhältlich.

Solche vorbekannten Farbmessvorrichtungen haben den Nachteil, dass die Genauigkeit der Farbmessung bei weitem nicht an die Genauigkeit heranreicht, mit der ein Betrachter verschiedene Farbnuancen voneinander unterscheiden kann. Dies ist darauf zurückzuführen, dass das menschliche Auge zwischen einer wesentlich höheren Anzahl von verschiedenen Farben unterscheiden kann als die besten verfügbaren Farbmessvorrichtungen.

Der Erfindung liegt daher die Aufgabe zugrunde, ein verbessertes System und Verfahren zur Bestimmung der Anteile von Komponenten einer Rezeptur zur Herstellung eines Produkts, vorzugsweise eines Polymers, mit einer gewünschten Farbe sowie ein entsprechendes Herstellungsverfahren zu schaffen.

Die der Erfindung zugrunde liegende Aufgabe wird mit den Merkmalen der unabhängigen Patentansprüche jeweils gelöst. Bevorzugte Ausführungsformen der Erfindung sind in den abhängigen Patentansprüchen angegeben.

Die Erfindung erlaubt es, eine Rezeptur für die Herstellung eines Produkts so auszuwählen, dass eine gewünschte Farbe des Produkts genau getroffen wird. Dies ist insbesondere für die Herstellung von Kunststoffspritzgießformteilen von besonderem Vorteil.

Erfindungsgemäß wird ein entsprechend trainiertes neuronales Netz zur Bestimmung der Anteile von Komponenten einer Rezeptur verwendet. Nach einer bevorzugten Ausführungsform der Erfindung, betrifft die Rezeptur die Anteile der Komponenten eines Polymers. Basierend auf den mittels des neuronalen Netzes ermittelten Anteilen der Komponenten der Rezeptur erfolgt dann die Kompoundierung des Polymers für einen nachfolgenden Spritzgießvorgang.

Nach einer weiteren bevorzugten Ausführungsform der Erfindung hat das neuronale Netz einen Eingang für eine oder mehrere Farbkoordinaten der Komponenten der Rezeptur. Dabei wird vorausgesetzt, dass eine Menge von vorgegebenen Komponenten zu einer Rezeptur gehört, wobei die prozentualen Anteile einiger oder aller der Komponenten der Rezeptur variabel sind, um einen bestimmten Farbton genau zu treffen.

Über die Eingabemöglichkeit der Farbkoordinaten der Komponenten der Rezeptur ist es möglich auch Schwankungen von Farbtönen der Ausgangsmaterialien zu berücksichtigen. Dies ist insbesondere bei solchen Komponenten wesentlich, deren Farbe gewissen statistischen Schwankungen unterliegt, so dass verschiedene Lieferchargen derselben Komponente leicht unterschiedliche Farbtönungen haben, z.B. von weiß bis gelbstichig. Der Grad der Abweichung von weiß zu gelb wird dabei beispielsweise durch den sogenannten Yellowness-Index gekennzeichnet.

Die Abweichung einer Komponente von deren normaler oder durchschnittlicher Farbe kann dabei beispielsweise durch eine eindimensionale Farbkoordinate wie z. B. den Yellowness-Index gekennzeichnet sein. Alternativ können auch z. B. drei Farbkoordinaten nach CIELAB oder einem anderen System mit einem Farbmessgerät bestimmt werden und entsprechenden Eingängen des neuronalen Netzes für die betreffende Komponente zugeordnet werden.

Das neuronale Netz hat ferner einen Eingang für die Farbkoordinaten der gewünschten Farbe des Produkts, wobei es sich hierbei beispielsweise um drei oder vier Koordinaten - je nach dem gewählten Farbkoordinatensystem - handelt.

Nach einer weiteren bevorzugten Ausführungsform werden die Rezepturanteile der einzelnen Komponenten als fest betrachtet. In diesem Fall ist lediglich die Menge der beizufügenden Farbstoffe und Farbpigmente variabel. Statt der Anteile der Komponenten der Rezeptur gibt das neuronale Netz für diesen Fall lediglich die zuzugebenen Mengen von Farbstoffen und/oder Farbpigmenten aus.

Nach einer weiteren bevorzugten Ausführungsform der Erfindung wird ein solches neuronales Netz für jede Rezeptur getrennt trainiert. Das neuronale Netz hat also keinen Eingang zur Spezifizierung der Rezeptur des Produkts und von dessen Komponenten, da diese als fest vorgegeben betrachtet werden.

Zum Training eines erfindungsgemäßen neuronalen Netzes werden zunächst die Farbkoordinaten der Komponenten aus denen eine Probe hergestellt werden soll, bestimmt. Mit einer bestimmten Rezeptur wird dann die Probe im Wege eines Kunststoffspritzgießverfahrens hergestellt. Die Farbkoordinaten der Probe werden dann ermittelt, und dieser Vorgang wird für eine variierte Rezepturzusammensetzung wiederholt, um eine Probe mit einer anderen Farbe herzustellen. Auch von dieser Probe werden wiederum die Farbkoordinaten ermittelt.

Ferner werden solche Proben mit unterschiedlichen Chargen von Komponenten hergestellt, um auch die Varianz in der Farbe der Ausgangskomponenten mit berücksichtigen zu können. Das neuronale Netz wird dann mit den so gewonnenen Daten, d.h. jeweils mit den Farbkoordinaten der Komponenten, den Farbkoordinaten der damit hergestellten Probe und den Anteilen der Komponenten der betreffenden Rezeptur trainiert.

Nachdem ein solches neuronales Netz für eine bestimmte Rezeptur zur Verfügung steht, kann mit sehr geringem Aufwand ein Produkt aus einem Kunststoff dieser Rezeptur mit einer genau definierten Farbe hergestellt werden. Hierzu werden die Farbkoordinaten der gewünschten Farbe des Produkts in das neuronale Netz eingegeben sowie auch die Farbkoordinaten der Komponenten aus denen das Produkt hergestellt werden soll. Hieraus ermittelt das neuronale Netz die erforderlichen Anteile der Komponenten der Rezeptur, um die gewünschte Farbe zu erlangen.

Danach wird dann ein Granulat des Polymers entsprechend den so ermittelten Rezepturanteilen hergestellt und die Produktion des Produkts kann unmittelbar ohne die Notwendigkeit vorausgehender Farbnachstellungen und Laborversuche aufgenommen werden. Dies spart in ganz erheblichen Maße Zeit und Kosten ein und hat ferner eine gleichbleibende Qualität auch bei schwankender Farbe der Komponenten verschiedener Lieferchargen zur Folge.

Für die Gewinnung von Trainingsdaten für das neuronale Netz ist es erforderlich, die Farbkoordinaten einer nach einer bestimmten Rezeptur hergestellten Probe exakt zu bestimmen. Hierzu werden erfindungsgemäß Farbvorlagen als Vergleichsnormal für die exakte Bestimmung der Farbkoordinaten der Farbe in einem diskreten Farbraum verwendet.

Dazu wird ein interessierender Farbraum mittels eines Farb-Koordinatensystems zunächst in eine Anzahl diskreter Farben unterteilt und für jede der diskreten Farben eine Farbvorlage hergestellt.

Die Herstellung einer solchen Farbvorlage kann mittels eines Piktographen erfolgen. Bei einem Piktographen handelt es sich um ein Gerät zur Herstellung eines digitalen Farbbildes, welches mittels Laserstrahlen auf einer Spezialfolie erzeugt wird. Solche Piktographen sind kommerziell z. B. erhältlich von Fuji Photo Film Co., Ltd., Japan, insbesondere das Gerät Digital Image Printer Pictrography 4000.

Nach einer bevorzugten Ausführungsform der Erfindung werden die verschiedenen Farbvorlagen in einem Katalog zusammengefasst. Ein solcher Katalog hat einen Index, der den jeweiligen Farbkoordinaten der Farbvorlagen entspricht, das heißt, auf jede der Farbvorlagen kann mittels der entsprechenden Farbkoordinaten unmittelbar in dem Katalog zugegriffen werden. Vorzugsweise beinhaltet jede Seite des Katalogs einen zweidimensionalen Ausschnitt aus z.B. einem vierdimensionalen Farbraum, insbesondere CMYK Farbraum, mit den Farbvorlagen, die zu diesem Ausschnitt dazugehören. Einen solchen zweidimensionalen Ausschnitt erhält man beispielsweise indem zwei Koordinaten festgelegt werden und die beiden anderen Koordinaten als Parameter dienen.

Nach einer bevorzugten Ausführungsform der Erfindung wird zur Bestimmung der Farbkoordinaten einer Probe zunächst eine Farbmessung mit einem Farbmessgerät durchgeführt. Mittels der so gewonnenen Farbkoordinaten wird auf die entsprechende Vorlage mit derselben Farbkoordinate in dem Farbkatalog zugegriffen. Vorzugsweise geht die Genauigkeit des Farbkatalogs über die Genauigkeit der Farbmessung wesentlich hinaus, das heißt, die Anzahl der diskreten Farben des Farbkatalogs ist wesentlich höher als die Anzahl der Farben zwischen denen das Farbmessgerät unterscheiden kann. Die durch die Farbmessung gewonnenen Farbkoordinaten sind daher zunächst nur vorläufig und dienen als Ausgangspunkt für eine Feinabstimmung mit den Farben des Farbkatalogs.

In einer bevorzugten Ausführungsform der Erfindung geht der Benutzer mit den durch die Farbmessung gewonnenen Farbkoordinaten auf die entsprechende Katalogseite, die die Farbvorlage mit den Farbkoordinaten beinhaltet. Der Benutzer vergleicht dann die Probe mit dieser Farbvorlage und vorzugsweise auch mit weiteren Farbvorlagen auf derselben Katalogseite, die zu der erstgenannten Farbvorlage benachbart sind. Vorzugsweise findet dieser Vergleich unter Normbedingungen, das heißt, unter Normlicht vorzugsweise nach ISO 3664 statt.

In einer weiteren bevorzugten Ausführungsform der Erfindung weisen die Farbvorlagen jeweils ein Loch in einem mittleren Bereich auf. Für einen genauen Farbvergleich legt der Benutzer die Probe unter die betreffende Farbvorlage und hat somit einen unmittelbaren Vergleich zwischen der Farbe der Probenoberfläche und der Farbe der Farbvorlage. Aufgrund des visuellen Vergleichs unter Normbedingungen mit der Farbvorlage der messtechnisch ermittelten Farbkoordinaten der Probe und den hierzu benachbarten Farbvorlagen mit Farbkoordinaten in einer Umgebung der messtechnisch erfassten Farbkoordinaten ermittelt der Benutzer dann endgültig die Farbkoordinaten der Probe, die aufgrund der höheren Farbauflösung des Farbkatalogs im Vergleich zu dem Farbmessgerät von den messtechnisch bestimmten Farbkoordinaten abweichen können.

Die Bestimmung der vorläufigen Farbkoordinaten mittels des Farbmessgeräts ist insofern besonders vorteilhaft, als dem Benutzer auf diese Art und Weise ein Ausgangspunkt für die Vornahme des visuellen Vergleichs der Farbvorlagen des Katalogs mit der Probe gegeben wird. Ohne einen solchen Ausgangspunkt müsste der Benutzer in einem äußerst umfangreichen Farbkatalog zunächst die am besten passende Katalogseite finden, was praktisch kaum durchführbar ist. Durch die Messung der Farbkoordinaten mit einer Farbmessvorrichtung kann der Benutzer über den Index des Katalogs unmittelbar auf die relevante Katalogseite zugreifen, um von dort ausgehend Farbvergleiche mit Farbvorlagen benachbarter Farbkoordinaten auf derselben oder benachbarten Katalogseiten durchzuführen.

In einer weiteren bevorzugten Ausführungsform der Erfindung werden die so ermittelten Farbkoordinaten in ein digitales Gerät zur Herstellung eines Farbbildes eingegeben, beispielsweise in einen Piktograph. Mittels des Piktographen kann dann eine exakte Reproduktion der Farbe der Oberfläche der Probe hergestellt werden.

In einer weiteren bevorzugten Ausführungsform der Erfindung folgt die Messung der Farbkoordinaten mit der Farbmessvorrichtung ein einem dreidimensionalem Farb-Koordinatensystem. Die in dem dreidimensionalem Farb-Koordinatensystem ermittelten Farbkoordinaten werden dann in ein vierdimensionales Farb-Koordinatensystem transformiert. Entsprechende Verfahren zur Transformierung von Farbkoordinaten zwischen verschiedenen Farb-Koordinatensystemen sind an sich z.B. aus US-A 6 108 442 und US-A 6 137 596 bekannt.

Nach einer weiteren bevorzugten Ausführungsform der Erfindung wird ferner Luminanz-Bildinformation der Probe ermittelt, beispielsweise durch Aufnahme eines schwarz-weiß Bildes der Probe oder mittels eines Fein-Scanners, der ein LCH Bildsignal liefert. Aus dem LCH Bildsignal wird dann die L-Komponente, das heißt, die Luminanz-Komponente, extrahiert und mit den zuvor ermittelten Farbkoordinaten in einem Bildverarbeitungsprogramm zu einer resultierenden Bildinformation kombiniert. Die C-Komponente eines LCH Bildsignals gibt die Chrominanz an und die H-Komponente den Farbwinkel auf einem 360 Grad Farbkreis.

Als Bildverarbeitungsprogramm kann dabei z. B. das Programm Adobe Photoshop verwendet werden, welches aus einem schwarz-weiß Bild und zusätzlicher Farbinformationen in Form von Farbkoordinaten ein resultierendes Gesamtbild erzeugt. Diese resultierende Bildinformation kann wiederum für die Herstellung eines digitalen Farbbildes mittels eine Piktographen verwendet werden.

Dabei ist von besonderem Vorteil, dass sich neben der Farbinformation durch die Aufnahme der Luminanz-Information auch Oberflächenstrukturen, Texturen sowie Oberflächenglanz in der resultierenden Bildinformation bzw. in dem digitalen Farbbilder wiedergeben lassen.

Neben der Verwendung des Farbkatalogs für die Ermittlung der Farbkoordinaten einer Probe zum Zweck des Trainings des neuronalen Netzes kann der Farbkatalog bzw. das entsprechende System auch zur Bestimmung der Farbkoordinaten der gewünschten Farbe des Produkts verwendet werden. Beispielsweise liefert ein Kunde eine Farbvorlage zur Spezifizierung der gewünschten Farbe des Produkts, welche genau zu treffen ist. Die Farbkoordinaten dieser Farbvorlage werden dann unter Verwendung des Farbkatalogs erfindungsgemäß bestimmt und als Eingabeparameter für das neuronale Netz verwendet.

Im Weiteren wird die Erfindung mit Bezugnahme auf ein bevorzugtes Ausführungsbeispiel näher erläutert. Es zeigen:
- Fig. 1: ein Blockdiagramm einer ersten Ausführungsform eines neuronalen Netzes,
- Fig. 2: ein Blockdiagramm einer zweiten Ausführungsform eines neuronalen Netzes,
- Fig. 3: ein Flussdiagramm für die Gewinnung von Trainingsdaten für das neuronale Netz der Fig. 1,
- Fig. 4: ein Flussdiagramm einer Ausführungsform eines Verfahrens zur Herstellung eines Produkts mit einer gewünschten Farbe,
- Fig. 5: ein Flussdiagramm zur Veranschaulichung der Herstellung eines Farbkatalogs,
- Fig. 6: eine schematische Darstellung von zwei verschiedenen Seiten des Farbkatalogs,
- Fig. 7: eine Seite des Farbkatalogs mit Löchern in den Farbvorlagen für einen erleichterten visuellen Vergleich,
- Fig. 8: ein Flussdiagramm einer ersten Ausführungsform eines erfindungsgemäßen Verfahrens für die Bestimmung der Farbkoordinaten,
- Fig. 9: ein Flussdiagramm einer zweiten Ausführungsform des erfindungsgemäßen Verfahrens zur Bestimmung der Farbkoordinaten,
- Fig. 10: ein Flussdiagramm einer Ausführungsform eines erfindungsgemäßen Verfahrens zur Herstellung eines digitalen Farbbildes,
- Fig. 11: ein schematisches Blockdiagramm eines Systems zur Bestimmung der Farbkoordinaten einer Probe und zur Herstellung eines Farbbildes der Probe.

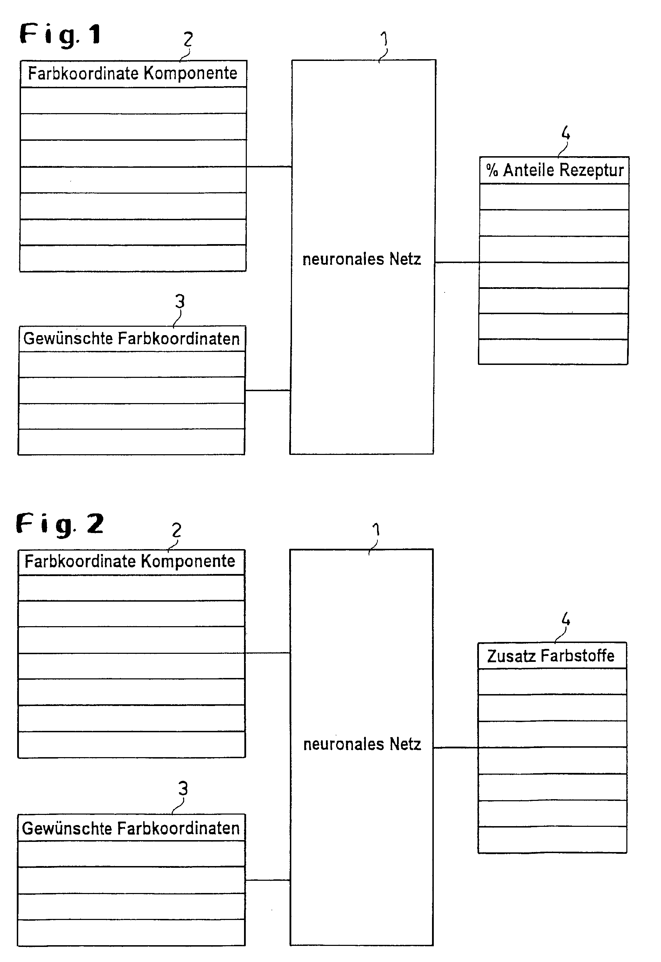

Die Fig. 1 zeigt ein neuronales Netz 1 mit den Eingängen 2 und 3 sowie dem Ausgang 4. Das neuronale Netz 1 bezieht sich auf eine bestimmte Rezeptur für die Herstellung eines Kunststoffspritzgießformteils. Die einzelnen Komponenten der Rezeptur sind fest vorgegeben. Eine oder mehrere Komponenten der Rezeptur haben variable Anteile, um unterschiedliche Farbtöne des Polymers herzustellen.

Der Eingang 2 dient zur Eingabe von Farbkoordinaten der Komponenten der Rezeptur. Dies dient zur Berücksichtigung von farblichen Schwankungen, denen eine bestimmte Komponente statistisch unterworfen ist, d. h. eine für die Herstellung eines bestimmten Produkts gelieferte Komponente des Polymers hat nicht immer dieselbe Farbe, sondern von Charge zu Charge mehr oder weniger große farbliche Schwankungen.

Diese Schwankungen können je nach Komponente typisch ausgeprägt sein, z. B. statt weiß mehr oder weniger gelbstichig oder statt weiß mehr oder weniger blaustichig etc. Für die Erfassung der farblichen Abweichung einer bestimmten Komponente von deren Durchschnitts- oder Normalton kann dabei eine eindimensionale Angabe ausreichend sein, wie z. B. der sogenannte Yellowness-Index. Es können jedoch auch drei oder vier Farbkoordinaten mit einem Farbmessgerät ermittelt werden.

Für jede Komponente der Rezeptur, deren farbliche Schwankung zu berücksichtigen ist, ist in dem Eingang 2 ein Eintrag vorgesehen. Vorzugsweise handelt es sich dabei um sämtliche der Komponenten der Rezeptur.

Der Eingang 3 dient zur Eingabe der Farbkoordinaten der gewünschten Farbe des Produkts. Hierbei kann es sich um die Angabe von beispielsweise drei oder vier Farbkoordinaten, je nach dem gewählten Farbkoordinatensystem handeln.

Aus diesen Eingabewerten der Eingänge 2 und 3 berechnet das neuronale Netz 1 die Anteile der Komponenten an der Rezeptur, so dass man die gewünschte Farbe unter Verwendung der betreffenden Chargen von Komponenten herstellen kann. Beispielsweise handelt es sich bei den Anteilen um Prozentangaben der Komponenten bezüglich der Zusammensetzung der Rezeptur.

Die Fig. 2 zeigt eine alternative Ausführungsform, in der entsprechende Elemente mit denselben Bezugszeichen der Fig. 1 gekennzeichnet sind. Auch das neuronale Netz 1 der Fig. 2 bezieht sich wiederum auf eine bestimmte Rezeptur mit definierten Komponenten. Zu diesen Komponenten gehören auch Farbstoffe und Farbpigmente. Anders als bei der Ausführungsform der Fig. 1 wird dabei vorausgesetzt, dass lediglich Komponenten der Rezeptur, bei denen es sich um Farbstoffe oder um Farbpigmente handelt, variable Anteile haben und das alle anderen Komponenten einen fest vorgegebenen Anteil aufweisen. Das entsprechend trainierte neuronale Netz 1 liefert daher an dessen Ausgang 4 im Gegensatz zu dem neuronalen Netz 1 der Fig. 1 lediglich eine Angabe betreffend der Menge von zuzusetzenden Farbstoffen und/oder Farbpigmenten, da die Anteile der weiteren Komponenten fest sind.

Ferner ist es auch möglich, ein neuronales Netz so zu trainieren, dass auch die Rezeptur, d. h. die Menge der Komponenten variabel ist, was allerdings einen erhöhten Aufwand hinsichtlich der Erstellung der für das Training des neuronalen Netzes erforderlichen Daten erfordert.

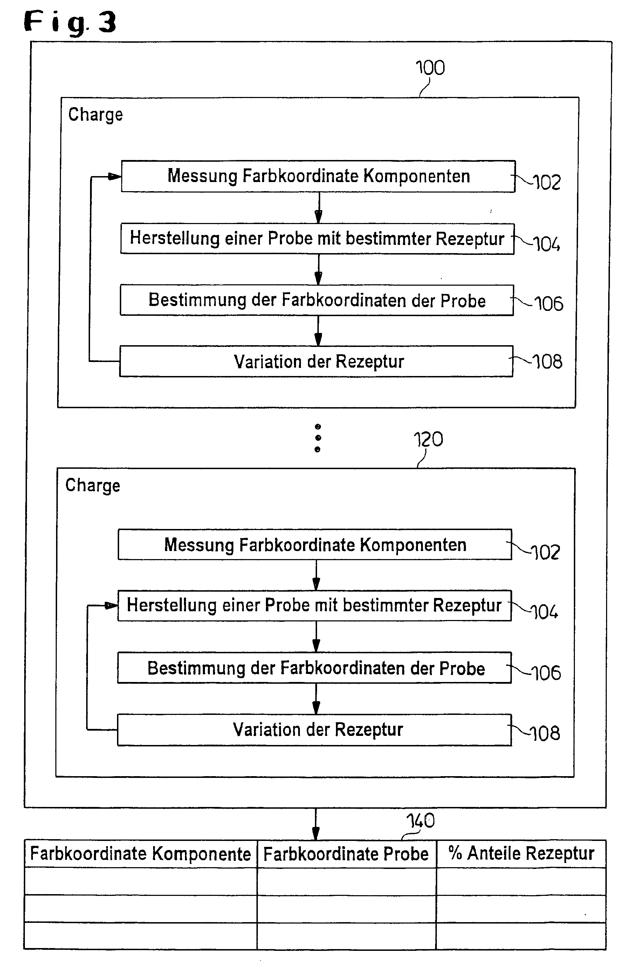

Die Fig. 3 zeigt ein bevorzugtes Ausführungsbeispiel hinsichtlich eines Verfahrens zur Generierung von Trainingsdaten zum Training des neuronalen Netzes 1 der Fig. 1.

Das Verfahren beinhaltet einen Schritt 100 für eine erste Charge und einen Schritt 120 für eine zweite Charge sowie weitere in der Fig. 3 nicht dargestellte Schritte für eine oder mehrere weitere Chargen von Komponenten der Rezeptur.

Der Schritt 100 beinhaltet einen Ablauf mit den Schritten 102 bis 108. In dem Schritt 102 werden die Farbkoordinaten der Komponenten der Rezeptur gemessen. Hierbei ist eine relativ grobe Messung, beispielsweise in einem eindimensionalen Farbkoordinatensystem, beispielsweise zur Ermittlung des sogenannten Yellownes-Index, ausreichend.

In dem Schritt 104 erfolgt dann die Herstellung einer oder mehrerer Proben in einem Kunststoffspritzgießverfahren mit diesen Komponenten, d. h. die Komponenten sind gemäß einer bestimmten Rezeptur kompoundiert worden, und ein entsprechendes Granulat ist hergestellt worden, welches dann für die Herstellung der Probe verwendet wird. Wichtig ist hierbei, dass für die Herstellung der Probe dieselben Komponenten verwendet werden, für die in dem Schritt 102 die Farbkoordinaten gemessen worden sind.

In dem Schritt 106 werden die Farbkoordinaten einer in dem Schritt 104 hergestellten Probe möglichst exakt ermittelt. In dem Schritt 108 wird die Rezeptur dann variiert, um eine Probe mit einer anderen Farbe herzustellen. Die Variation der Rezeptur kann durch Veränderung der Anteile von einer oder mehrer der Komponenten der Rezeptur erfolgen.

Auch für diese mit der variierten Rezeptur hergestellte Probe werden dann wiederum die Farbkoordinaten exakt bestimmt. Dieser Vorgang wird einige Male für verschiedene Variationen der Rezeptur d.h. für verschiedene Farben wiederholt. Die Variationen der Rezeptur können dabei statistisch gewählt werden, um ein Raster verschiedener Farben abzudecken.

Dieselben Schritte 102 bis 108 laufen auch in dem Schritt 120 allerdings mit Bezug auf eine andere Charge von Komponenten ab. Die so erhaltenen Daten werden in dem Schritt 140 beispielsweise in Form einer Tabelle ausgegeben. Die Tabelle beinhaltet in jeder Zeile die Farbkoordinaten der Komponenten der betreffenden Charge, die für die Herstellung der Probe verwendet worden ist, die möglichst exakten Farbkoordinaten dieser Probe sowie die Anteile der Komponenten an der Rezeptur für die Kompoundierung des Polymers zur Herstellung der betreffenden Probe.

Zum Training des neuronalen Netzes 1 der Fig. 1 wird dann auf diese Tabelle zugegriffen, um die zum Training erforderlichen Eingangsparameter für die Eingänge 2 und 3 abzurufen. Die resultierenden Anteile der Komponenten an der Rezeptur, die von dem neuronalen Netz 1 an dessen Ausgang 4 ausgegeben werden, werden dann mit den tatsächlichen Anteilen in der Tabelle verglichen. Bei einer Abweichung zwischen dem prognostizierten und dem tatsächlichen Wert, werden die Gewichtungen der Neuronen des neuronalen Netzes 1 entsprechend angepasst, wie es an sich bekannt ist.

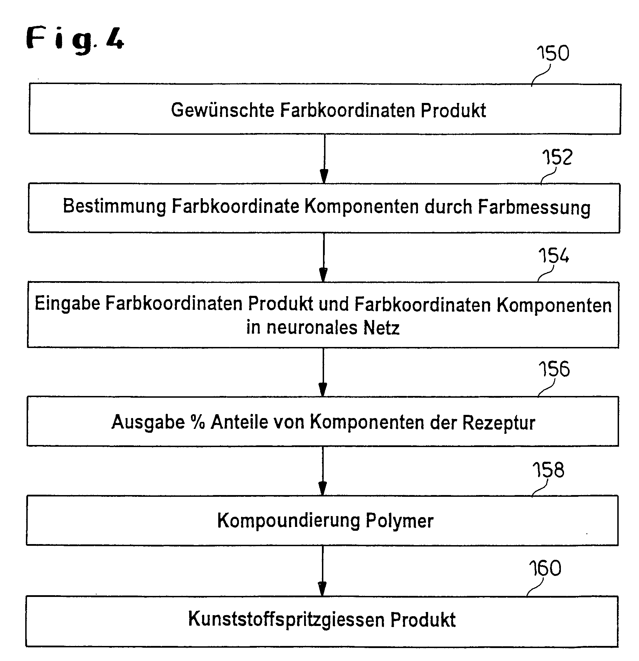

Die Fig. 4 zeigt ein Flussdiagramm eines erfindungsgemäßen Verfahrens für die Herstellung eines Kunststoffspritzgießformteils. In dem Schritt 150 werden zunächst die gewünschten Farbkoordinaten des Produkts festgelegt. Dies kann so erfolgen, dass die betreffenden Farbkoordinaten auf der Grundlage einer Farbvorlage, die der gewünschten Farbe entspricht, ermittelt werden oder die gewünschte Farbe mit den entsprechenden Farbkoordinaten unmittelbar einem Farbkatalogsystem entnommen wird.

In dem Schritt 152 werden die Farbkoordinaten der für die Herstellung des Produkts zu verwendenden Komponenten ermittelt, um auch farbliche Schwankungen der betreffenden Rohstoffe zu erfassen.

In dem Schritt 154 werden dann die gewünschten Farbkoordinaten des Produkts sowie die Farbkoordinaten der Komponenten in ein neuronales Netz eingegeben (vgl. neuronales Netz 1 der Fig. 1 und 2). In dem Schritt 156 gibt das neuronale Netz z.B. die prozentualen Anteile der Komponenten an der Rezeptur aus, um die gewünschte Farbe herzustellen.

In dem Schritt 158 wird das Polymer mit den entsprechenden Prozentanteilen der Komponenten kompoundiert und ein Granulat hergestellt. Hiermit erfolgt in dem Schritt 160 das Kunststoffspritzgießen des gewünschten Produkts.

Eine Farbeinstellung oder -nachstellung vor oder während der Produktion sowie auch die Durchführung von Laborversuchen zur Ermittlung von passenden Prozentanteilen der Komponenten zur Herstellung der gewünschten Farbe kann also entfallen.

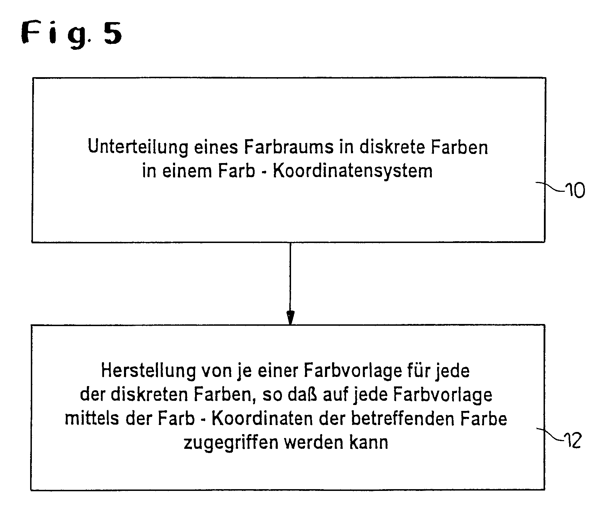

Die Fig. 5 zeigt ein Flussdiagramm zur Herstellung eines erfindungsgemäßen Farbkatalogs. In dem Schritt 10 wird zunächst ein interessierender Farbraum mittels eines Farb-Koordinatensystems in diskrete Farben unterteilt. Dabei kommen verschiedene bekannte Farb-Koordinatensysteme in Frage, so z. B. das RGB, CMY, LCH oder CMYK System oder ein anderes Farb-Koordinatensystem. Weitere Farb-Koordinatensysteme sind von der Comission Internationale L' Eclairge definiert worden.

Im Weiteren wird ohne Beschränkung der Allgemeinheit davon ausgegangen, dass für das Farb-Koordinatensystem der Farbvorlagen und des Farbkatalogs das CMYK System verwendet wird.

In dem Schritt 12 wird für jede der diskreten Farben des durch das Farb-Koordinatensystem unterteilten Farbraums eine Farbvorlage hergestellt. Die Anzahl der Farbvorlagen ist dabei durch die Quantisierungsintervalle für die Diskretisierung des Farbraums gegeben. Jede der Farbvorlagen ist durch deren Farbkoordinaten in dem gewählten Farb-Koordinatensystem eindeutig identifiziert. Die Farbkoordinate der Farbvorlage dient als Index oder als Schlüssel für den Zugriff auf die Farbvorlage, wenn die Farbkoordinaten bekannt sind.

Vorzugsweise werden mehrere solcher Farbvorlagen auf einer Katalogseite zusammengefasst, wobei dann eine Katalogseite einen zweidimensionalen Ausschnitt aus dem mehrdimensionalen Farb-Koordinatensystem wiedergibt.

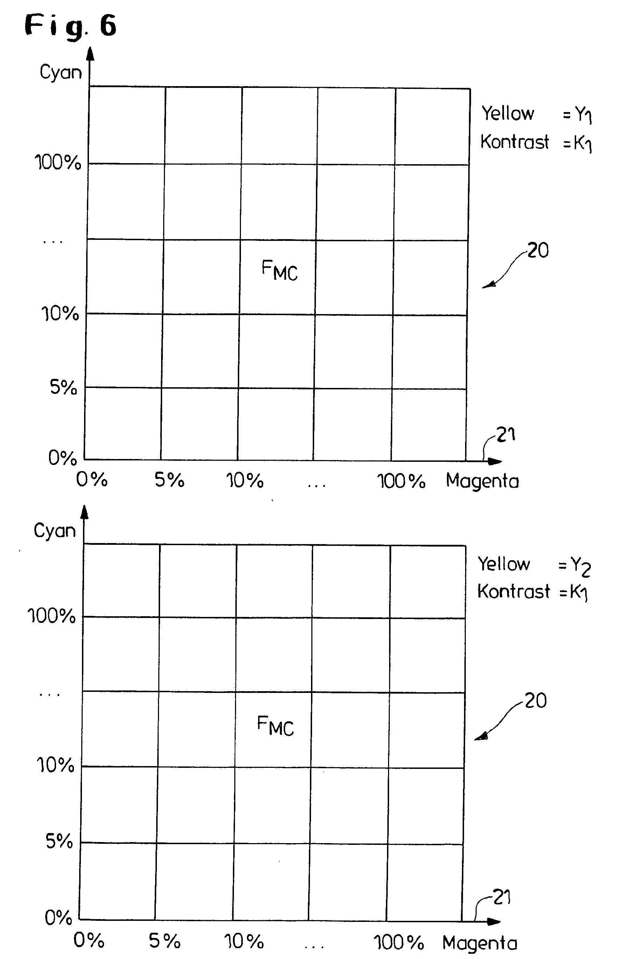

Dies ist mit Bezug auf die Fig. 6 näher erläutert. Die Fig. 6 zeigt eine Seite 20 des Farbkatalogs mit einem Kartesischen Koordinatensystem 21. Die Abzisse des Kartesischen Koordinatensystems 21 gibt den M-Anteil, das heißt, den Magentaanteil in Prozent an und die Ordinate des Kartesischen Koordinatensystems 21 gibt den C-Anteil, das heißt, den Cyananteil ebenfalls in Prozent an. Die Seite 20 stellt einen Ausschnitt aus dem diskreten Farbraum dar, wobei in dem entsprechenden Schnitt durch den Farbraum die Cyan- und Magentaanteile jeweils zwischen Null und Einhundert Prozent variieren und die Y, das heißt Yellow, und die K, das heißt die Kontrast-Anteile konstant sind. In dem betrachteten Beispiel hat der Anteil Y den Wert Y1 und der Anteil K hat den Wert K1 für alle Farben dieses Ausschnitts aus dem diskreten Farbraum.

Die Quantisierung des Farbraums ist in dem gezeigten Ausführungsbeispiel in fünf Prozent-Schritten vorgenommen worden, wobei auch kleinere oder größere Schritte je nach der Genauigkeitsanforderung gewählt werden können.

Die Seite 20 zeigt also eine Matrix von Farbvorlagen, in der jede der Farbvorlagen dieselbe Y-Komponente Y1 und dieselbe Kontrast-Komponente K1 aufweist und nur die Magenta- und Cyan-Anteile variieren. Dadurch entstehen verschiedene Farbvorlagen FMC, die jeweils eine homogene diskrete Farbe mit einem bestimmten Prozentanteil Magenta und einem bestimmten Prozentanteil Cyan sowie den für die Seite 20 konstanten Anteilen Y1 und K1 aufweisen. Auf eine bestimmte Farbvorlage lässt sich also mittels deren CMYK Farbkoordinaten in dem Katalog zugreifen, indem die Katalogseite 20 mit den betreffenden Yellow und Kontrast Koordinaten gewählt wird und auf dieser Katalogseite 20 dann die Farbvorlage mit den zutreffenden Magenta- und Cyan-Anteilen.

Die Fig. 6 zeigt eine weitere Seite 20 des Farbkatalogs, die einen anderen Ausschnitt aus dem diskreten Farbraum gibt, nämlich für die Yellow-Anteile Y2 und Kontrast-Anteile K1.

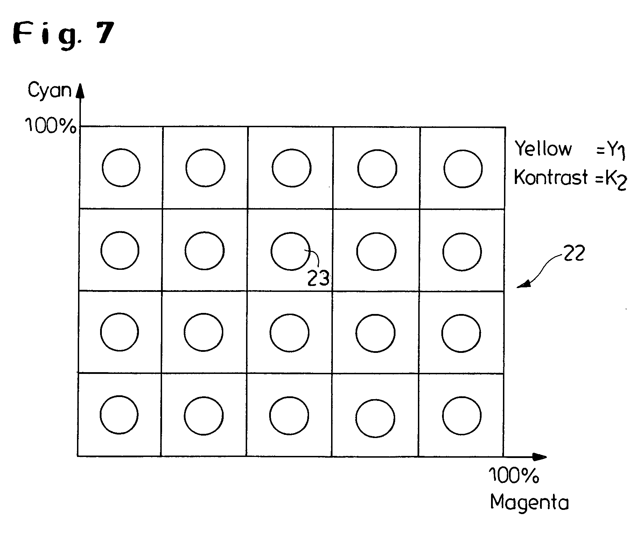

Die Fig. 7 zeigt eine entsprechende Seite 22 eines solchen Farbkatalogs. In der Ausführungsform der Fig. 7 hat jede Farbvorlage der Seite 22 ein Loch 23 in einem mittleren Bereich. Ein Loch 23 dient für den bequemen Vergleich der Farbe der Farbvorlage mit der Farbe einer Oberfläche der Probe, deren exakte Farbkoordinaten zu bestimmen sind. Für einen solchen visuellen Vergleich wird die Probe unter die Farbvorlage gebracht und durch das Loch in der Farbvorlage hindurch betrachtet.

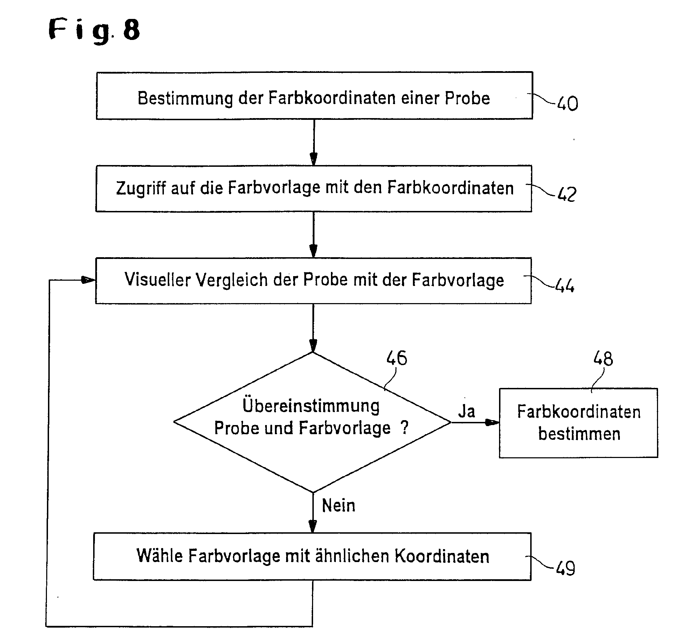

Die Fig. 8 zeigt ein Flussdiagramm eines Verfahrens zur Bestimmung der Farbkoordinaten.

In dem Schritt 40 werden zunächst die Farbkoordinaten der Probe durch Messung mit einer Farbmessvorrichtung ermittelt. Mit diesen Farbkoordinaten erfolgt dann in dem Schritt 42 ein Zugriff auf die entsprechende Farbvorlage. Diese wird in dem Schritt 44 mit der Probe visuell verglichen. Vorzugsweise erfolgt dieser Vergleich unter Normbedingungen, das heißt, unter Normlicht.

In dem Schritt 46 entscheidet der Benutzer, ob die Probe mit der Farbvorlage übereinstimmt. Wenn dies aufgrund des visuellen Vergleichs der Fall ist, sind die Farbkoordinaten der Farbvorlage zugleich die Farbkoordinaten der Probe und die Farbe der Probe ist somit bestimmt.

Ist das Gegenteil der Fall, so wird in dem Schritt 49 eine andere Farbvorlage von dem Benutzer gewählt, die ähnliche Farbkoordinaten aufweist. Dabei kann es sich z. B. um eine oder mehrere Farbvorlagen derselben Seite (vgl. Seite 20 oder Seite 22 der Figuren 2 bzw. 3) handeln, die zu der Farbvorlage mit den messtechnisch bestimmten Farbkoordinaten benachbart sind. Es kann sich jedoch auch um Farbvorlagen benachbarter Koordinaten auf verschiedenen Katalogseiten handeln.

Eine solche in dem Schritt 49 gewählte Farbvorlage wird dann wiederum in dem Schritt 44 visuell mit der Probe verglichen. Dieser Vorgang wird solange wiederholt, bis die Farbvorlage mit der besten farblichen Übereinstimmung mit der Probe durch den Benutzer gefunden worden ist.

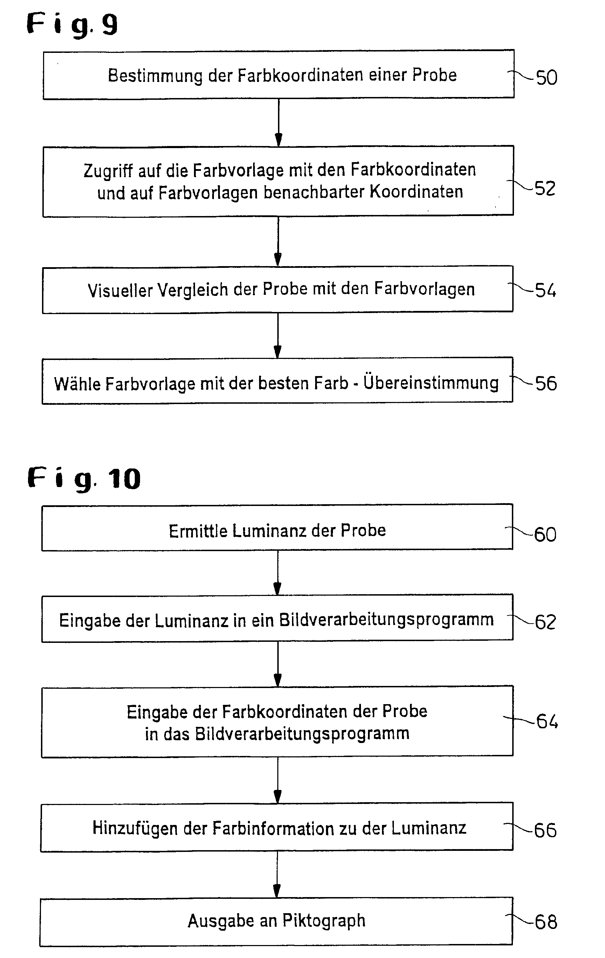

Die Fig. 9 zeigt eine alternative Ausführungsform des Verfahrens der Fig. 8, bei dem in dem Schritt 50 zunächst wieder die Farbkoordinaten der Probe messtechnisch bestimmt werden. In dem Schritt 52 erfolgt dann ein Zugriff auf die Farbvorlage in dem Farbkatalog mit diesen Farbkoordinaten sowie auf weitere Farbvorlagen mit hierzu benachbarten Farbkoordinaten. Hierbei handelt es sich vorzugsweise um Farbvorlagen derselben Katalogseite.

Diese Farbvorlagen werden in dem Schritt 54 visuell mit der Probe verglichen, um die Farbvorlage mit der besten farblichen Übereinstimmung zu ermitteln (Schritt 56).

Die Fig. 10 veranschaulicht ein entsprechendes Verfahren zur Herstellung eines digitalen Farbbildes. In dem Schritt 60 wird eine Luminanz der Probe ermittelt, vorzugsweise mittels eines Fein-Scanners, der ein LCH Signal abgibt. Die Luminanz ergibt sich in diesem Fall aus der L-Komponente des von dem Fein-Scanner abgegebenen Signals.

Diese Luminanz-Information wird in dem Schritt 62 in ein Bildverarbeitungsprogramm eingegeben. Man erhält auf diese Art und Weise eine schwarz-weiß Abbildung der Probe, die Textur- und/oder Glanzinformationen beinhaltet. In dem Schritt 64 werden die zuvor bestimmten Farbkoordinaten der Probe ebenfalls in das Bildverarbeitungsprogramm eingegeben und in dem Schritt 66 mit der Luminanz-Bildinformation zu einer resultierenden Bildinformation kombiniert. Das so in dem Schritt 66 digital erzeugte Bild wird dann in dem Schritt 68 auf einer entsprechenden Vorrichtung ausgegeben, die den Genauigkeitsanforderungen genüge trägt. Hierzu kann beispielsweise ein Piktograph verwendet werden.

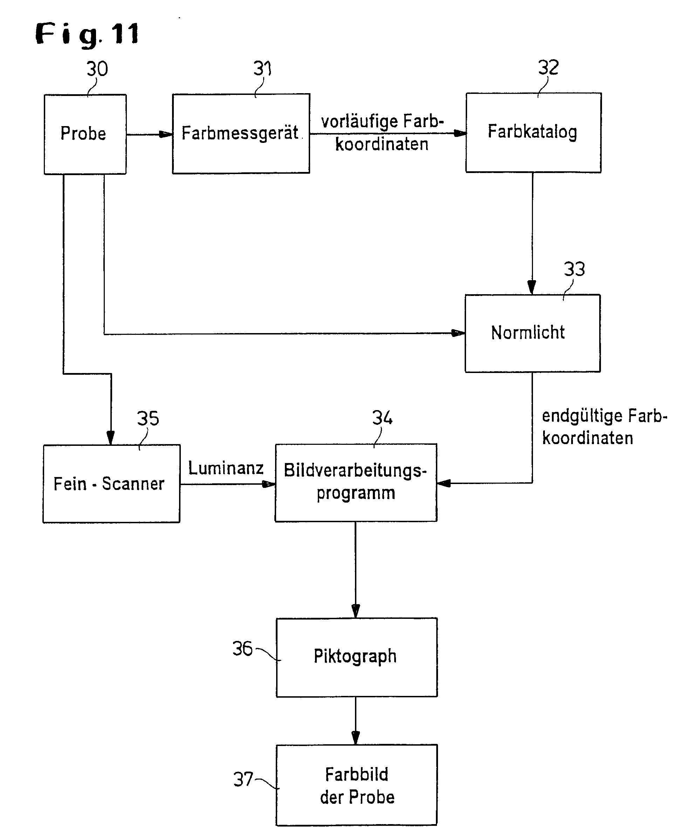

Die Fig. 11 zeigt ein entsprechendes System. Ein Farbmessgerät 31 dient zur Ermittlung der Farbkoordinaten einer Probe 30. Mittels der messtechnisch ermittelten vorläufigen Farbkoordinaten der Probe 30 wird dann auf einen Farbkatalog 32 zugegriffen, der die diskreten Farben eines quantisierten Farbraums beinhaltet, wobei auf die einzelnen Farbvorlagen mittels derer Farbkoordinaten in dem Farbkatalog 32 zugegriffen werden kann.

Der Farbkatalog 32 kann beispielsweise aus verschiedenen Seiten bestehen, die jeweils einen zweidimensionalen Ausschnitt aus dem mehrdimensionalen Farbraum wiedergeben (vgl. die Seiten 20 und 22 der Fig. 6 bzw. 7). Der Vergleich der so selektierten Farbvorlage mit der Probe 30 erfolgt dann unter einem Normlicht-Gerät 33. Aus diesem visuellen Vergleich mit der Farbvorlage bzw. weiteren Farbvorlagen mit benachbarten Farbkoordinaten folgen dann die entgültigen Farbkoordinaten der Probe 30. Diese werden in ein Bildverarbeitungsprogramm 34 eingegeben.

Ferner wird mittels eines Fein-Scanners 35 eine Luminanz-Bildinformation erzeugt, die ebenfalls in das Bildverarbeitungsprogramm 34 eingegeben wird. Das Bildverarbeitungsprogramm 34 kombiniert die Luminanz-Bildinformation mit den Farbkoordinaten zu einer resultierenden Bildinformation, die an einen Piktographen 36 ausgegeben wird, um ein Farbbild 37 der Probe herzustellen.

### Bezugszeichenliste

- Neuronales Netz: 1
- Eingang: 2
- Eingang: 3
- Ausgang: 4
- Schritt: 10
- Schritt: 12
- Seite: 20
- Kartesisches Koordinatensystem: 21
- Seite: 22
- Loch: 23
- Probe: 30
- Farbmessgerät: 31
- Farbkatalog: 32
- Normlicht-Gerät: 33
- Bildverarbeitungsprogramm: 34
- Fein-Scanner: 35
- Piktograph: 36
- Farbbild: 37
- Schritt: 40
- Schritt: 42
- Schritt: 44
- Schritt: 46
- Schritt: 48
- Schritt: 49
- Schritt: 50
- Schritt: 52
- Schritt: 54
- Schritt: 56
- Schritt: 60
- Schritt: 62
- Schritt: 64
- Schritt: 66
- Schritt: 68
- Schritt: 100
- Schritt: 102
- Schritt: 104
- Schritt: 108
- Schritt: 120
- Schritt: 140

## Patentansprüche

1. Neuronales Netz zur Bestimmung von Anteilen von Komponenten einer Rezeptur zur Herstellung eines Produkts einer bestimmten Farbe, vorzugsweise eines Polymers, mit einem Eingang (2, 3) zur Eingabe einer Farbkoordinate einer Komponente der Rezeptur und/oder zur Eingabe der gewünschten Farbkoordinaten des Produkts und mit einem Ausgang (4) zur Ausgabe von zumindest einem Anteil einer Komponente.

2. Neuronales Netz nach Anspruch 1, wobei es sich bei den Komponenten, deren Anteil bestimmt wird, um Farbstoffe und/oder Farbpigmente handelt.

3. Verfahren zum Trainieren eines neuronalen Netzes mit folgenden Schritten:
a) Messung einer Farbkoordinate einer Komponente einer Rezeptur,
b) Herstellung einer Probe mit den Komponenten der Rezeptur,
c) Bestimmung der Farbkoordinaten der Probe,
d) Wiederholung der Schritte a), b) und c) bei Variation der Rezeptur zur Herstellung von Proben unterschiedlicher Farben,
e) Trainieren des neuronalen Netzes mit den Farbkoordinaten der Proben und den Farbkoordinaten der Komponenten als Eingangsparameter und mit den Anteilen der Komponenten an der jeweiligen Rezeptur als Ausgangsparameter.

4. Verfahren nach Anspruch 3, wobei die Schritte a), b) und c) für unterschiedliche Chargen von Komponenten durchgeführt werden.

5. Verfahren zur Bestimmung der Anteile von Komponenten einer Rezeptur zur Herstellung eines Produkts mit bestimmten Farbkoordinaten mit folgenden Schritten:
a) Bestimmung einer Farbkoordinate einer Komponente durch Farbmessung,
b) Eingabe der gewünschten Farbkoordinaten des Produkts und der gemessenen Farbkoordinaten der Komponente in ein neuronales Netz,
c) Ausgabe der Anteile der Komponenten der Rezeptur durch das neuronale Netz.

6. Verfahren zur Herstellung eines Kunststoffspritzgießformteils mit folgenden Schritten:
a) Bestimmung der Anteile der Komponenten der Rezeptur mittels eines Verfahrens nach Anspruch 5,
b) Kompoundierung des Polymers entsprechend der Rezeptur,
c) Durchführung eines Kunststoffspritzgießverfahrens mit dem kompoundierten Polymer.

7. Verfahren nach Anspruch 3 oder 4 mit folgenden weiteren Schritten zur Bestimmung der Farbkoordinaten der Probe:
- Messung der Farbkoordinaten der Probe,
- Zugriff auf zumindest eine Farbvorlage mittels der Farbkoordinaten,
- Vergleich der Farbvorlage mit der Probe zur Verifizierung der Farbkoordinaten.

8. Verfahren nach Anspruch 3, 4 oder 7 mit folgenden weiteren Schritten zur Bestimmung der Farbkoordinaten der Probe:
- Messung der Farbkoordinaten,
- Zugriff auf eine Farbvorlage mittels der Farbkoordinaten und auf weitere Farbvorlagen mit benachbarten Farbkoordinaten,
- Vergleich der Farbvorlage und der weiteren Farbvorlagen mit der Probe zur Bestimmung der Farbvorlage mit der am besten mit der Probe übereinstimmenden Farbe.

9. Verfahren nach Anspruch 7 oder 8, bei dem der Vergleich visuell durchgeführt wird.

10. Verfahren nach Anspruch 7, 8 oder 9, bei dem der Vergleich unter Normlicht durchgeführt wird.

11. Verfahren nach einem der vorhergehenden Ansprüche 7 bis 10, bei dem die Farbvorlage oder die Farbvorlagen in einem mittleren Bereich ein Loch aufweisen und ein Oberflächenbereich der Probe zum Vergleich mit der betreffenden Farbvorlage durch das Loch betrachtet wird.

12. Verfahren nach einem der vorhergehenden Ansprüche 7 bis 11, bei dem die Farbvorlagen in einem Katalogsystem abgelegt sind und das Katalogsystem mittels der Farbkoordinaten der Farbvorlagen indexiert ist, und auf eine Farbvorlage in dem Katalogsystem mittels deren Farbkoordinate zugegriffen wird.

13. Verfahren nach Anspruch 12, bei dem jede Seite des Katalogsystems einen zweidimensionalen Ausschnitt aus einem diskreten Farbraum beinhaltet.

14. Verfahren nach einem der vorhergehenden Ansprüche 7 bis 13, wobei ein dreidimensionaler diskreter Farbraum verwendet wird.

15. Verfahren nach einem der vorhergehenden Ansprüche 7 bis 13, bei dem ein vierdimensionaler diskreter Farbraum verwendet wird.

16. Verfahren nach einem der vorhergehenden Ansprüche 7 bis 15, wobei zunächst dreidimensionale Farbkoordinaten der Probe gemessen werden und die dreidimensionalen Farbkoordinaten in vierdimensionale Farbkoordinaten transformiert werden, um mittels der vierdimensionalen Farbkoordinaten auf die Farbvorlage bzw. die Farbvorlagen zuzugreifen.

17. System zur Herstellung eines Produkts aus den Komponenten einer Rezeptur mit einem Farbkatalog zur Bestimmung der Farbkoordinaten der gewünschten Farbe des Produkts und mit einem neuronalen Netz nach Patentanspruch 1 oder 2.

18. System nach Anspruch 17, wobei der Farbkatalog einen n-dimensionalen Farbraum abbildet, vorzugsweise einen drei- oder vierdimensionalen Farbraum, mit einer Farbvorlage für jede Farbkoordinate des Farbraums und einem Index, so dass auf jede der Farbvorlagen mittels der betreffenden Farbkoordinate zugegriffen werden kann.

19. System nach Anspruch 17 oder 18, bei dem jede der Farbvorlagen in einem mittleren Bereich ein Loch aufweist.

20. System nach Anspruch 17 oder 18, bei dem jede Katalogseite einen zweidimensionalen Ausschnitt des n-dimensionalen Farbraums beinhaltet.

21. System nach einem der vorhergehenden Ansprüche 17 bis 20 mit einem Farbmessgerät (31) zur Ermittlung von Farbkoordinaten der Probe, wobei der Farbkatalog (32) zur Verifizierung der gemessenen Farbkoordinaten durch Vergleich der entsprechenden Farbvorlage mit einer Probe dient.

22. System nach Anspruch 21 mit Mitteln 33 zur Bereitstellung von Normlicht für den Vergleich der Farbvorlage oder der Farbvorlagen mit der Probe unter Norm-Bedingungen.

23. System nach Anspruch 21 oder 22, bei dem das Farbmessgerät zur Bestimmung dreidimensionaler Farbkoordinaten ausgebildet ist und mit Mitteln zur Transformation der dreidimensionalen Farbkoordinaten in die vierdimensionalen Farbkoordinaten des vierdimensionalen Farbraums des Farbkatalogs.
